# EUROPEAN PATENT SPECIFICATION

(11) **EP 3 789 708 B1**
(45) Date of publication and mention of the grant of the patent: **12.01.2022**
(21) Application number: 19793820.2
(22) Date of filing: 05.03.2019
(51) Int. Cl.: F25D 23/08, F25D 25/02, A47B 88/963

(54) **REFRIGERATING AND FREEZING DEVICE AND DRAWER ASSEMBLY THEREOF**
KÜHL- UND GEFRIERVORRICHTUNG UND SCHUBLADENANORDNUNG DAFÜR
DISPOSITIF DE RÉFRIGÉRATION ET DE CONGÉLATION ET SON ENSEMBLE TIROIR

(30) Priority: 28.04.2018 CN 201810403227
(43) Date of publication of application: 10.03.2021
(73) Proprietor: Haier Smart Home Co., Ltd., Qingdao, Shandong 266101 (CN)
(72) Inventor: LI, Xingwei, Qingdao, Shandong 266101 (CN); HUANG, Kai, Qingdao, Shandong 266101 (CN); ZHANG, Heng, Qingdao, Shandong 266101 (CN)
(74) Representative: Ziebig & Hengelhaupt Patent- und Rechtsanwaltskanzlei PartG mbB
(86) International application number: PCT/CN2019/077039
(87) International publication number: WO 2019/205816

(56) References cited:
- EP-A2- 2 784 417
- CN-A- 102 261 794
- CN-A- 103 277 970
- CN-A- 106 885 436
- CN-A- 108 397 962
- CN-A- 108 444 197
- CN-U- 204 404 683
- CN-U- 206 959 445
- CN-U- 208 312 818
- CN-U- 208 312 819
- CN-U- 208 312 864
- CN-U- 208 312 865
- KR-A- 20130 010 324
- KR-A- 20140 013 518
- US-A1- 2010 083 687

## Description

The present invention relates to refrigeration equipment, and particularly relates to a refrigerating and freezing device and a drawer assembly thereof.

### BACKGROUND OF THE INVENTION

In order to meet the high-quality requirements of users, existing refrigerating and freezing devices, such as refrigerators, are usually provided with a closed storage space, so as to avoid smell mixing between the storage space and other compartments in the refrigerating and freezing device. There are many ways to form the storage space. One is to arrange a clapboard inside the compartment to realize sealing, but the sealing effect of the clapboard assembly position is very poor. The other is to arrange a drawer assembly in the refrigerating and freezing device, the drawer assembly usually includes a sealing barrel and a drawer, and the drawer is provided with a front-end plate and a drawer body. In order to form the closed storage space inside the drawer, in the prior art, a single strip-shaped or ring-shaped sealing member (this type of sealing member usually has an O-shaped or C-shaped cross section) is usually designed at an interface between the front-end plate and the sealing barrel. It is necessary to use a pressing force between the front-end plate and the sealing barrel after the drawer is pushed into the sealing barrel to realize the sealing between the drawer and the sealing barrel. However, after the drawer is pushed into the sealing barrel, the pressing force between the front-end plate and the sealing barrel is limited, which is not enough to enable an elastic sealing member to generate deformation, so that the sealing effect is very poor. In other words, such sealing effect that depends on the external acting force is very unreliable and cannot meet the requirements of storage devices that require a higher sealing effect. Furthermore, in the prior art, no consideration is given to sealing in other positions where there is a gap, so that a real closed space cannot be formed in the drawer.

Documents EP2784417, CN206959445, CN103277970, US2010/083687 and KR20130010324 disclose drawer assemblies for refrigerating and freezing devices.

### BRIEF DESCRIPTION OF THE INVENTION

An objective of a first aspect of the present invention is to overcome at least one defect in the prior art and provide a drawer assembly with a higher sealing level and a better sealing effect for a refrigerating and freezing device.

Another objective of the first aspect of the present invention is to facilitate the manufacture, repair or replacement of the drawer assembly.

A further objective of the first aspect of the present invention is to enhance the sealing effect of the drawer assembly.

Another further objective of the first aspect of the present invention is to prevent condensed water from entering an accommodating space where a display control assembly is located and causing the display control assembly to fail.

An objective of a second aspect of the present invention is to provide a refrigerating and freezing device with a drawer assembly according to any one of claims 1 to 9.

The present invention is disclosed in the independent claim 1. Further embodiments are disclosed in the dependent claims.

According to the first aspect of the present invention, the present invention provides a drawer assembly for a refrigerating and freezing device, including:
a sealing barrel, provided with a front end opening and including a barrel body provided with a top opening and a barrel cover configured to cover the top opening;
a tray, configured to be inserted into a bottom of the sealing barrel via the front end opening in a way of being capable of being pushed and pulled; and
a drawer, carried on the tray, configured to be inserted into the sealing barrel along with the tray in a way of being capable of being pushed and pulled, and provided with a drawer body and a front-end plate arranged on a front side of the drawer body.

The tray is provided with a head part located outside the sealing barrel when the drawer is in a fully closed state, and airtight sealing is formed between the head part of the tray and the drawer, between the head part of the tray and a front end of a bottom plate of the sealing barrel, between the front end plate and a front end of the barrel cover of the sealing barrel, as well as between the barrel body and the barrel cover via sealing members, so that when the drawer is in the fully closed state, a closed storage space is formed inside the drawer.

Optionally, each of a first sealing member arranged between the head part of the tray and the drawer, a second sealing member arranged between the head part of the tray and the front end of the bottom plate of the sealing barrel, and a third sealing member arranged between the front end plate and the front end of the barrel cover of the sealing barrel includes a body and a deformation blocking sheet extending outward in a bent manner from the body along an arc or a broken line.

Optionally, the first sealing member is connected to the head part of the tray.

The deformation blocking sheet of the first sealing member extends downward in a suspending manner from front to back from the body of the first sealing member along the arc, and is in elastic contact with the drawer

Optionally, the tray is further provided with a tray bottom plate connected to a rear side of the head part.

An extending tail end of the deformation blocking sheet of the first sealing member abuts against an upper surface of the tray bottom plate.

Optionally, the drawer assembly further includes a display control assembly, the tray further includes a display cover covering a front side of the head part, and the display control assembly is arranged in an accommodating space defined between the display cover and the head part.

Optionally, a middle part of the body of the first sealing member is provided with a first slot having a downward notch.

The head part of the tray is provided with a first flange extending upward, and the first flange is inserted into the first slot so as to form a labyrinth type airtight structure between a gap between the drawer and the tray bottom plate and the accommodating space.

Optionally, the second sealing member is connected to the bottom plate of the sealing barrel.

The deformation blocking sheet of the second sealing member in the oblique downward direction extends forward from the body of the second sealing member and then in the oblique upward direction extends forward, so as to be in elastic contact with the head part of the tray when the drawer is in the fully closed state.

Optionally, the third sealing member is connected to the barrel cover of the sealing barrel.

The deformation blocking sheet of the third sealing member in the oblique upward direction extends forward from the body of the third sealing member and then in the oblique downward direction extends forward, so as to be in elastic contact with the front-end plate when the drawer is in the fully closed state.

Optionally, labyrinth type airtight sealing is formed between the barrel body and the barrel cover via an inserted fourth sealing member.

According to the second aspect of the present invention, the present invention further provides a refrigerating and freezing device, including: a box body, defining at least one storage compartment therein; and any one of the above drawer assemblies according to any one of claims 1 to 9, detachably arranged in one of the storage compartments so as to provide a closed storage space in the refrigerating and freezing device.

The designer of the present application first breaks through the traditional design thinking and designs the sealing barrel of the drawer assembly into a split type with the barrel body and the barrel cover, so that on the basis of simplifying a mold, the deformation of the barrel body and the barrel cover during mold stripping is avoided, the structural stability of the sealing barrel is improved, and the usable space in the sealing barrel is increased. Furthermore, the drawer assembly of the present application further includes the tray and the drawer provided with the front-end plate and the drawer body. That is, in the present application, the drawer assembly is split into multiple parts, and a sealing member is arranged between every two parts, which not only facilitates the manufacture, repair or replacement of each part, but also ensures that good sealing can be formed at the interface between every two parts, so that sealing with a better effect and a higher level is formed inside the drawer.

Further, the designer of the present application has realized through deep analysis that different parts of the drawer assembly are different due to their positions, their own structures and other structures that match them, and therefore, the structural type of the sealing member used between different parts will have a greater impact on the sealing performance of the entire drawer assembly. Therefore, in the present application, each of the first sealing member between the head part of the tray and the drawer, the second sealing member between the head part of the tray and the sealing barrel, and the third sealing member between the front end plate and the sealing barrel is further designed to be provided with the body and the deformation blocking sheet extending outward in a bent manner from the body along the arc or the broken line. Elastic deformation of the sealing member can be facilitated in terms of both material and shape by means of the deformation blocking sheet in the special shape and the characteristic of generating elastic deformation of the deformation blocking sheet, and therefore, in the case of larger manufacturing tolerances for the tray, the sealing barrel, the front end plate and the drawer, it can be ensured that the interface can still realize a good sealing effect.

Further, the designer of the present application further specially designs the inserted fourth member between the barrel body and the barrel cover, so as to form labyrinth type airtight sealing between the barrel body and the barrel cover. In this way, if the outside air enters the closed space in the drawer via the possible gap between the barrel body and the barrel cover, it must pass through a labyrinth type path formed by the arrangement of the fourth sealing member, the necessary path is greatly extended, and therefore, the sealing effect is better.

Further, the display control assembly is further arranged in the accommodating space defined between the head part of the tray and the display cover. If condensed water enters the accommodating space, the display control assembly will fail. The suspending deformation blocking sheet can block moisture in the drawer to the outside of the tray in advance, so as to prevent the moisture from entering the accommodating space via an assembly gap between the tray and the drawer. At the same time, in the present application, by specially designing the structure of the body of the first sealing member, the labyrinth type airtight structure can be formed between the gap between the drawer and the tray bottom plate and the above accommodating space, thereby effectively preventing the moisture inside the drawer from entering the accommodating space and causing the display control assembly to fail.

According to the following detailed description of the specific embodiment of the present invention in conjunction with the drawings, those skilled in the art will more clearly understand the above and other objectives, advantages and features of the present invention.

### BRIEF DESCRIPTION OF THE DRAWINGS

Some specific embodiments of the present invention are described in detail below with reference to the drawings by way of example without limitation. The same reference numerals in the drawings indicate the same or similar components or parts. Those skilled in the art should understand that these drawings are not necessarily drawn to scale.

All the technical features of the independent claim 1 are obligatory features for all the embodiments of the present invention. In the drawings:
Figure 1 is a schematic structural diagram of a drawer assembly according to the embodiment of the present invention;
Figure 2 is a schematic structural exploded diagram of a drawer assembly according to the embodiment of the present invention;
Figure 3 is a schematic cross-sectional diagram of a drawer assembly according to the embodiment of the present invention;
Figure 4 is a schematic enlarged diagram of a part D in Figure 3;
Figure 5 is a schematic enlarged diagram of a part C in Figure 3;
Figure 6 is a schematic enlarged diagram of a part B in Figure 3;
Figure 7 is a schematic enlarged diagram of a part A in Figure 3;
Figure 8 is a schematic exploded cross-sectional diagram of partial structures of a drawer assembly according to the embodiment of the present invention; and
Figure 9 is a schematic structural diagram of a refrigerating and freezing device according to an embodiment of the present invention.

### DETAILED DESCRIPTION

The present invention first provides a drawer assembly for a refrigerating and freezing device according to claim 1.

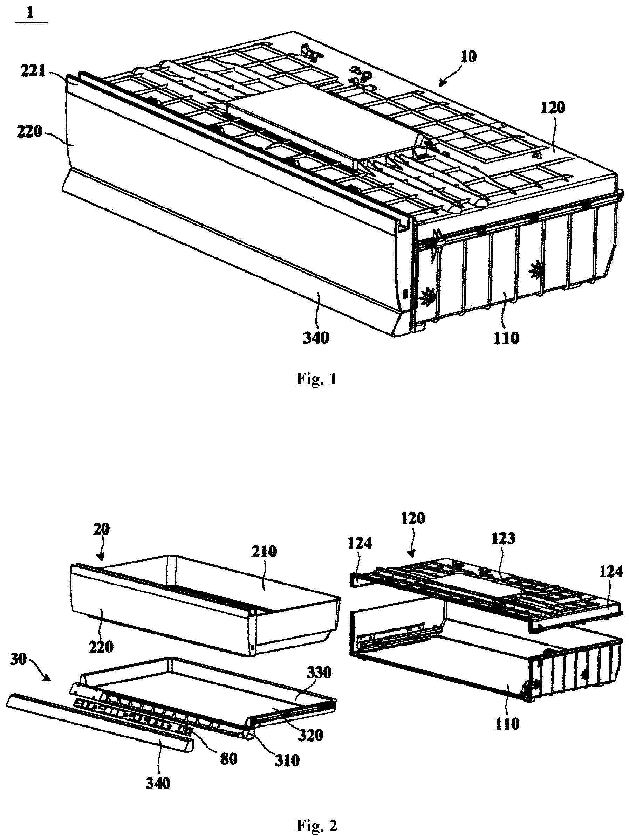

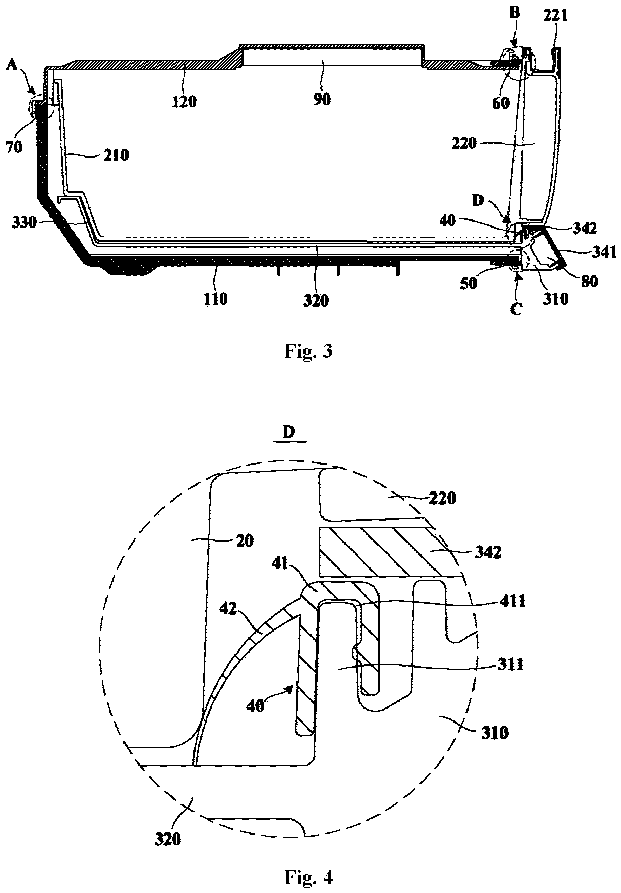

Figure 1 is a schematic structural diagram of a drawer assembly according to the embodiment of the present invention. Figure 2 is a schematic structural exploded diagram of a drawer assembly according to the embodiment of the present invention. Figure 3 is a schematic cross-sectional diagram of a drawer assembly according to the embodiment of the present invention. Referring to Figure 1 to Figure 3, a drawer assembly 1 according to the embodiment of the present invention includes a sealing barrel 10, a drawer 20 and a tray 30.

The sealing barrel 10 is configured to be shelved in a refrigerating and freezing device and is provided with a front-end opening, so that the drawer 20 and the tray 30 are inserted into the sealing barrel 10 via the front end opening in a way of being capable of being pushed and pulled. The sealing barrel 10 includes a barrel body 110 provided with a top opening and a barrel cover 120 configured to cover the top opening of the barrel body 110. The designer of the present application breaks through the traditional design thinking and designs the sealing barrel 10 of the drawer assembly 1 into a split type with the barrel body 110 and the barrel cover 120, so that on the basis of simplifying a mold, the deformation of the barrel body 110 and the barrel cover 120 during mold stripping is avoided, the structural stability of the sealing barrel 10 is improved, and the usable space in the sealing barrel 10 is increased. The barrel cover 120 may be provided with a horizontally extending plate part 123 and convex edges 124 extending downward from the two horizontal side edges and the rear side edge of the plate part 123.

The tray 30 is configured to be inserted into a bottom of the sealing barrel 10 via the front end opening in a way of being capable of being pushed and pulled. The tray 30 is provided with a head part 310 located outside the sealing barrel 10 when the drawer 20 is in a fully closed state.

The drawer 20 is carried on the tray 30 and configured to be inserted into the sealing barrel 10 along with the tray 30 in a way of being capable of being pushed and pulled. The drawer 20 is provided with a drawer body 210 and a front-end plate 220 arranged on a front side of the drawer body 210. A storage space for storing articles is defined in the drawer body 210, and an upper end of the storage space is provided with an opening for a user to take and place articles. The front-end plate 220 extends substantially in a vertical direction so as to block the front end opening of the sealing barrel 10 when the drawer 20 is in the fully closed state. The front-end plate 220 may be provided with a handle part 221 so as to facilitate the user to push and pull the drawer 20 via the handle part 221.

The tray 30 may further include a tray bottom plate 320 extending rearward from the head part 310 and a tray rear plate 330 obliquely extending upward from a tail end of the tray bottom plate 320. The head part 310 of the tray may be located below the front-end plate 220 and abuts against the front side of the drawer body 20 to support the front-end plate 220, and the tray 30 can be pulled out together when the drawer 20 is pulled outward. The tray bottom plate 320 may be located below the drawer body 210 to support the drawer body 210. The tray rear plate 330 abuts against a rear side of a rear wall of the drawer body 210, so that when the drawer 20 is pushed into the sealing barrel 10, the tray 30 is pushed into the sealing barrel 10 together.

Airtight sealing is formed between the head part 310 of the tray 30 and the drawer 20, between the head part 310 of the tray 30 and a front end of a bottom plate 113 of the sealing barrel 10, between the front end plate 220 and a front end of the barrel cover 120 of the sealing barrel 10, as well as between the barrel body 110 and the barrel cover 120 via sealing members, so that when the drawer 20 is in the fully closed state, a closed storage space is formed inside the drawer 20. The barrel cover 120 of the sealing barrel 10 is the plate part 123 of the barrel cover 120, and the bottom plate 113 of the sealing barrel 10 is formed on the barrel body 110. It should be noted that the condition that the drawer 20 is in a fully closed state means that the drawer 20 is pushed into the sealing barrel 10 to a maximum extent and cannot be further pushed.

In the present application, the drawer assembly 1 is split into multiple parts, and a sealing member is arranged between every two parts, which not only facilitates the manufacture, repair or replacement of each part, but also ensures that good sealing can be formed at the interface between every two parts, so that sealing with a better effect and a higher level is formed inside the drawer.

In some embodiments of the present invention, each of a first sealing member 40 arranged between the head part 310 of the tray 30 and the drawer 20, a second sealing member 50 arranged between the head part 310 of the tray 30 and the front end of the bottom plate 113 of the sealing barrel 10, and a third sealing member 60 arranged between the front end plate 220 and the front end of the barrel cover 120 of the sealing barrel 10 includes a body and a deformation blocking sheet extending outward in a bent manner from the body along an arc or a broken line.

The designer of the present application has realized through deep analysis that different parts of the drawer assembly 1 are different due to their positions, their own structures and other structures that match them, and therefore, the structural type of the sealing member used between different parts will have a greater impact on the sealing performance of the entire drawer assembly. Therefore, in the present application, each of the first sealing member 40 arranged between the head part 310 of the tray 30 and the drawer 20, the second sealing member 50 arranged between the head part 310 of the tray 30 and the front end of the bottom plate 113 of the sealing barrel 10, and the third sealing member 60 arranged between the front end plate 220 and the front end of the barrel cover 120 of the sealing barrel 10 is further designed to be provided with the body and the deformation blocking sheet extending outward in a bent manner from the body along the arc or the broken line. Elastic deformation of the sealing member can be facilitated in terms of both material and shape by means of the deformation blocking sheet in the special shape and the characteristic of generating elastic deformation of the deformation blocking sheet, and therefore, in the case of larger manufacturing tolerances for the tray, the sealing barrel, the front end plate and the drawer, it can be ensured that the interface can still realize a good sealing effect.

Figure 4 is a schematic enlarged diagram of a part D in Figure 3. In some embodiments of the present invention, the first sealing member 40 includes a body 41 and a deformation blocking sheet 42 extending outward in a bent manner from the body 41 along an arc so as to form airtight sealing between the head part 310 of the tray 30 and the drawer 20.

Further, the first sealing member 40 may be connected to the head part 310 of the tray 30. The deformation blocking sheet 42 of the first sealing member 40 extends downward in a suspending manner from front to back from the body 41 of the first sealing member 40 along an arc, and is in elastic extrusion contact with the drawer 20. Specifically, the deformation blocking sheet 42 may be in elastic extrusion contact with a bottom corner of a front end of the drawer 20.

In the process of pushing or pulling the drawer 20 and no matter what state the drawer 20 is in, the tray 30 and the drawer 20 are relatively immobile, that is, the first sealing member 40 between the tray 30 and the drawer 20 will not be frequently switched between elastic deformation and deformation recovery. Therefore, the requirements for generating the elastic deformation of the first sealing member 40 are higher than the requirements for recovering the deformation. In the present application, the deformation blocking sheet 42 of the first sealing member 40 is specially designed to extend downward in a suspending manner from front to back from the body of the first sealing member along an arc, so as to well meet the above requirements.

Further, the thickness of the deformation blocking sheet 42 gradually decreases from top to bottom, the thinner part is favorable for generating elastic deformation, and the thicker part can provide certain deformation resistance, so as to increase the acting force between the deformation blocking sheet 42 and the drawer 20, thereby improving the sealing effect between the deformation blocking sheet and the drawer.

In some embodiments of the present invention, an extending tail end of the deformation blocking sheet 42 abuts against an upper surface of the tray bottom plate 320. Therefore, the extending tail end of the deformation blocking sheet 42 can be supported to a certain extent, the deformation resistance of the deformation blocking sheet 42 can be appropriately improved, and the reaction required for the same deformation is increased, thereby enhancing the sealing performance between the tray 30 and the drawer 20.

In some alternative embodiments of the present invention, the deformation blocking sheet 42 of the first sealing member 40 may also extend outward along other arcs, for example, extend upward along the arcs from front to back.

In some embodiments of the present invention, the drawer assembly 1 further includes a display control assembly 80, the tray 30 further includes a display cover 340 covering a front side of the head part 310, and the display control assembly 80 is arranged in an accommodating space defined between the display cover 340 and the head part 310. The suspending deformation blocking sheet 42 can block moisture in the drawer 20 to the outside of the tray 30 in advance, so as to prevent the moisture from entering the accommodating space via an assembly gap between the tray 30 and the drawer 20 and causing the display control assembly 80 to fail.

Specifically, the display control assembly 80 is configured to adjust and display parameters in the drawer 20. For example, the display control assembly may be configured to adjust and display temperature, humidity or other environmental parameters in the drawer 20, and may also be configured to display the parameters such as the name and expiration date of the stored food. The drawer assembly 1 may further include a wireless power supply generating module, a wireless power supply receiving module, cables, etc., which are arranged in the sealing barrel 10.

Further, a middle part of the body 41 of the first sealing member 40 is provided with a first slot 411 having a downward notch. The head part 310 of the tray 30 is provided with a first flange 311 extending upward, and the first flange 311 is inserted into the first slot 411 so as to form a labyrinth type airtight structure between a gap between the drawer 20 and the tray bottom plate 320 and the accommodating space. If condensed water occurs in the accommodating space where the display control assembly 80 is located, it will affect the display of information, and the condensed water is not easy to remove. Therefore, in the present application, by further specially designing the structure of the body 41 of the first sealing member, the labyrinth type airtight structure can be formed between the gap between the drawer 20 and the tray bottom plate 320 and the above accommodating space, thereby effectively preventing the moisture flow inside the drawer 20 from entering the accommodating space and causing the display control assembly 80 to fail.

In some embodiments of the present invention, the deformation blocking sheet 42 of the first sealing member 40 may be in elastic contact with a front end of a lower part of the drawer body 210. The display cover 340 is provided with a display section 341 and an extending section 342. The display section 341 is arranged on the front side of the head part 310 of the tray and located below the front-end plate 220. The extending section 342 extends rearward from an upper end of the display section 341 and is inserted between the front end plate 220 and the head part 310 of the tray, and the body 41 of the first sealing member 40 is clamped between the extending section 342 of the display cover 340 and the head part 310 of the tray 30.

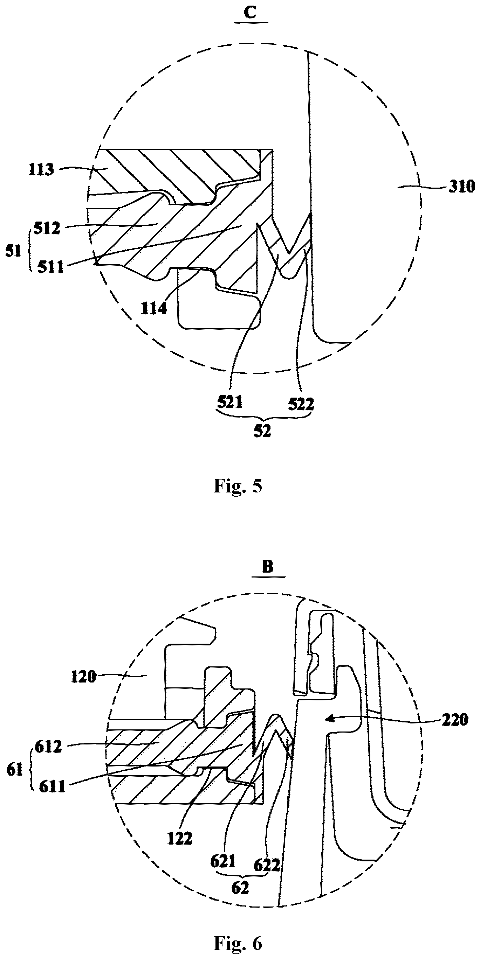

Figure 5 is a schematic enlarged diagram of a part C in Figure 3. The second sealing member 50 may include a body 51 and a deformation blocking sheet 52 extending outward in a bent manner from the body 51 along a broken line, so that when the drawer 20 is in the fully closed state, airtight sealing is formed between the head part of the tray 30 and the bottom plate 113 of the sealing barrel 10. The deformation blocking sheet 52 of the present application has a bent shape, and therefore, the deformation resistance of the deformation blocking sheet 52 can be appropriately improved, and the reaction required for the same deformation is increased, thereby enhancing the sealing performance between the tray 30 and the front end of the bottom plate 113 of the sealing barrel 10.

In some embodiments of the present invention, the second sealing member 50 may be connected to the bottom plate 113 of the sealing barrel 10. The deformation blocking sheet 52 of the second sealing member 50 obliquely downward extends forward from the body 51 of the second sealing member 50 and then obliquely upward extends forward, so as to be in elastic extrusion contact with the head part 310 of the tray 30 when the drawer 20 is in the fully closed state. Therefore, the section of the deformation blocking sheet 52 that obliquely upward extends forward can be allowed to have a sufficient length to generate sufficient elastic deformation.

Further, the length of a first section 521 of the deformation blocking sheet 52 that obliquely extends downward is smaller than the length of a second section 522 of the deformation blocking sheet 52 that obliquely extends upward. On the one hand, the longer second section 522 extending upward can ensure that the deformation blocking sheet 52 generates sufficient elastic deformation when the drawer 20 is in the fully closed state, and on the other hand, the shorter first section 521 extending downward can provide a certain deformation-resistant acting force, so as to increase the interaction force between the deformation blocking sheet 52 and the bottom plate 113 of the sealing barrel, thereby further enhancing the sealing effect between the tray 30 and the sealing barrel 20.

In some alternative embodiments, the deformation blocking sheet 52 of the second sealing member 50 may also extend outward along other broken lines, for example, first obliquely upward extending forward and then obliquely downward extending forward.

In some embodiments of the present invention, the front end of the bottom plate 113 of the sealing barrel is provided with a second groove 114 recessed rearward, and a notch of the second groove 114 faces forward. The body 51 of the second sealing member 50 includes a limiting part 511 connected to a rear side of the deformation blocking sheet 52 and a connecting part 512 extending rearward from the limiting part 511. The connecting part 512 is inserted into the second groove 114 of the bottom plate 113, realizing the installation of the second sealing member 50. The limiting part 511 abuts against the front end of the bottom plate 113, realizing the airtight sealing between the second sealing member 50 and the bottom plate 113 of the sealing barrel.

Further, the connecting part 512 extends rearward from a middle part of the limiting part 511 to enable upper and lower parts of the limiting part 511 to abut against the front end of the bottom plate 113, so that labyrinth type airtight sealing is formed between the second sealing member 50 and the bottom plate 113 of the sealing barrel, enhancing the sealing effect.

Still further, the thickness of the upper part of the limiting part 511 in the front-rear direction is smaller than the thickness of the lower part of the limiting part 511 in the front-rear direction. An extending tail end (i.e., a rear end) of the connecting part 512 is provided with anti-drop barbs to prevent the connecting part 512 from detaching from the second groove 114 of the bottom plate 113, thereby improving the installation stability of the second sealing member 50.

Figure 6 is a schematic enlarged diagram of a part B in Figure 3. The third sealing member 60 may include a body 61 and a deformation blocking sheet 62 extending outward in a bent manner from the body 61 along a broken line, so that when the drawer 20 in the fully closed state, airtight sealing is formed between the front end plate 220 and the barrel cover 120 of the sealing barrel 10. The deformation blocking sheet 62 of the present application has a bent shape, and therefore, the deformation resistance of the deformation blocking sheet 62 can be appropriately improved, and the reaction required for the same deformation is increased, thereby enhancing the sealing performance between the front-end plate 220 and the front end of the barrel cover 120 of the sealing barrel 10.

In some embodiments of the present invention, the third sealing member 60 may be connected to the barrel cover 120 of the sealing barrel 10. The deformation blocking sheet 62 of the third sealing member 60 obliquely upward extends forward from the body 61 of the third sealing member 60 and then obliquely downward extends forward, so as to be in elastic extrusion contact with the front end plate 220 when the drawer 20 is in the fully closed state. Therefore, it is possible to avoid the formation of a groove having an upward opening on the third sealing member 60 to accumulate dirt, thereby ensuring that the position of the third sealing member 60 remains clean and tidy for a long time.

Further, the length of a first section 621 of the deformation blocking sheet 62 that obliquely extends upward is smaller than the length of a second section 622 of the deformation blocking sheet 62 that obliquely extends downward. On the one hand, the longer second section 622 extending downward can ensure that the deformation blocking sheet 62 generates sufficient elastic deformation when the drawer 20 is in the fully closed state, and on the other hand, the shorter first section 621 extending upward can provide a certain deformation-resistant acting force, so as to increase the interaction force between the deformation blocking sheet 62 and the front end plate 220, thereby further enhancing the sealing effect between the front end plate 220 and the sealing barrel 20.

In some alternative embodiments, the deformation blocking sheet 62 of the third sealing member 60 may also extend outward along other broken lines, for example, first obliquely downward extending forward and then obliquely upward extending forward.

In some embodiments, the front end of the barrel cover 120 of the sealing barrel 10 is provided with a first groove 122 recessed rearward, and a notch of the first groove 122 faces forward. The body 61 of the third sealing member 60 includes a limiting part 611 connected to a rear side of the deformation blocking sheet 62 and a connecting part 612 extending rearward from the limiting part 611. The connecting part 612 is inserted into the first groove 122 of the barrel cover 120, realizing the installation of the third sealing member 60. The limiting part 611 abuts against the front end of the barrel cover 120, realizing the airtight sealing between the third sealing member 60 and the barrel cover 120.

Further, the connecting part 612 extends rearward from a middle part of the limiting part 611 to enable upper and lower parts of the limiting part 611 to abut against the front end of the barrel cover 120, so that labyrinth type airtight sealing is formed between the third sealing member 60 and the barrel cover 120, enhancing the sealing effect.

Still further, the thickness of the upper part of the limiting part 611 in the front-rear direction is greater than the thickness of the lower part of the limiting part 611 in the front-rear direction. An extending tail end (i.e., a rear end) of the connecting part 612 is provided with anti-drop barbs to prevent the connecting part 612 from detaching from the first groove 122 of the barrel cover 120, thereby improving the installation stability of the third sealing member 60.

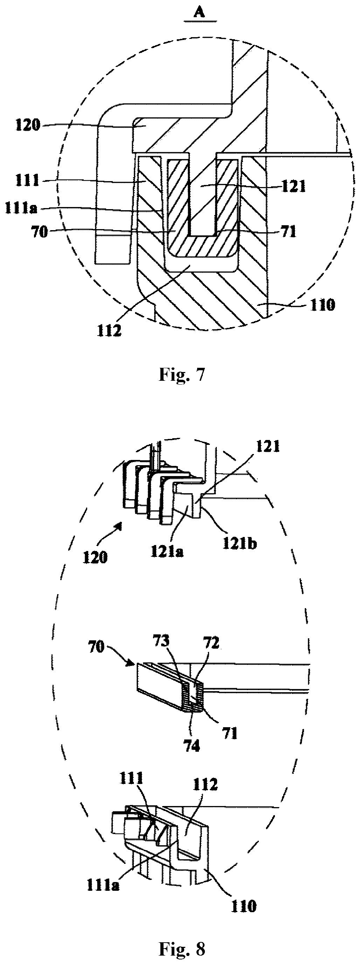

Figure 7 is a schematic enlarged diagram of a part A in Figure 3. Labyrinth type airtight sealing is formed between the barrel body 110 and the barrel cover 120 via an inserted fourth sealing member 70. The barrel body 110 and the barrel cover 120 may be fastened by screw connection, clamping connection or other suitable manners. In the present application, the inserted fourth sealing member 70 is specially designed between the barrel body 110 and the barrel cover 120, so as to form labyrinth type airtight sealing between the barrel body and the barrel cover. In this way, the fourth sealing member 70 can be easily assembled. Furthermore, if the outside air enters the closed space in the drawer 20 via the possible gap between the barrel body 110 and the barrel cover 120, it must pass through a labyrinth type path formed by the arrangement of the fourth sealing member 70, the necessary path is greatly extended, and therefore, the sealing effect is better.

The barrel cover 120 may be provided with a horizontally extending plate part 123 and convex edges 124 extending downward from the two horizontal side edges and the rear side edge of the plate part 123, and the fourth sealing member 70 may be arranged between the convex edges 124 and the barrel body 110.

Figure 8 is a schematic exploded cross-sectional diagram of partial structures of a drawer assembly according to an embodiment of the present invention. In some embodiments of the present invention, the top of the barrel body 110 is provided with a skirt part 111 extending outward from an outer surface of a circumferential wall of the barrel body 110 and then extending upward in a bent manner. The length of the skirt part 111 extending upward in a bent manner can enable a tail end of the skirt part 111 to be flush with the circumferential wall of the barrel body 110. A third groove 112 is defined between the skirt part 111 and the circumferential wall of the barrel body 110, a notch of the third groove 112 faces upward, and the fourth sealing member 70 is arranged in the third groove 112.

Further, the outer side of the skirt part 111 may be provided with a plurality of claws, and edge parts of the convex edges 124 may be provided with a plurality of buckles corresponding to the claws of the skirt part one by one, so that fastening connection between the barrel cover 120 and the barrel body 110 can be realized by means of the clamping connection between the claws and the buckles.

In some embodiments of the present invention, a second slot 71 with an upward opening is formed in a middle part of the fourth sealing member 70. An edge part of the barrel cover 120, configured to be matched with the barrel body 110, is provided with a second flange 121 extending downward, and the second flange 121 is inserted into the second slot 71 of the fourth sealing member 70 from top to bottom so as to form labyrinth type airtight sealing between the interface of the barrel cover 120 and the fourth sealing member 70 and the interface of the fourth sealing member 70 and the barrel body 110, thereby effectively preventing the inside air and outside air of the sealing barrel 10 from communicating via the interface between the barrel cover 120 and the fourth sealing member 70 and the interface between the fourth sealing member 70 and the barrel body 110.

Further, the second flange 121 is a wedge-shaped body with a thick top and a thin bottom. The cross section of the second flange 121 is tapered from top to bottom, that is, the cross section of the second flange 121 is approximately inverted trapezoidal. Specifically, a vertical outer circumferential surface 121a on the outer side and a vertical outer circumferential surface 121b on the inner side of the second flange 121 may both be oblique surfaces extending substantially in a vertical direction, and the two have opposite oblique directions and substantially the same oblique degrees.

In the present application, on the basis of specific definition of the matched structures among the fourth sealing member 70, the barrel body 110 and the barrel cover 120, the flange on the barrel cover 120, configured to be inserted into the slot of the fourth sealing member 70, is further specially designed as the wedge-shaped body with a thick top and a thin bottom, thereby improving the smoothness of connection and matching between the barrel cover 120 and the barrel body 110. Furthermore, by means of the thicker upper part of the second flange, a contact is formed between the second flange 121 and the fourth sealing member 70 as well as between the fourth sealing member 70 and the third groove 112 of the barrel body 110, thereby reducing or even avoiding the possibility of gap formation, and further improving the sealing effect between the barrel body 110 and the barrel cover 120.

In some embodiments of the present invention, the second slot 71 is defined by an inner vertical inner circumferential surface 72 on the inner side, an outer vertical inner circumferential surface 73 on the outer side and an inner bottom surface 74 of the fourth sealing member 70.

Further, a minimum vertical distance between the vertical outer circumferential surface 121a on the outer side of the second flange 121 and an inner surface 111a of the skirt part 111 is slightly smaller than a vertical distance between the outer vertical inner circumferential surface 73 defining the second slot 71 and the inner surface 111a of the skirt part 111 when the fourth sealing member 70 is in a natural state. It can be understood that the condition that the fourth sealing member 70 is in a natural state means that the fourth sealing member 70 is not subjected to the acting force of stretching, that is, a state without any deformation. Therefore, after the second flange 121 is inserted into the second slot 71 of the fourth sealing member 70, the fourth sealing member 70 can be outwardly supported to a certain extent, and caused to generate deformation and be in close contact with the circumferential wall of the barrel body 110 and the skirt part 111, and improving the sealing effect between the barrel body 110 and the fourth sealing member 70 as well as between the barrel cover 120 and the fourth sealing member 70.

In some embodiments, the fourth sealing member 70 may be an elastic sealing strip with a U-shaped cross section.

Specifically, the elastic sealing strip may include three strip-shaped sealing sections which are respectively located on the two horizontal sides and the rear side of the sealing barrel 10. The strip-shaped sealing section on the rear side of the sealing barrel 10 may be connected with the two strip-shaped sealing sections on the two horizontal sides of the sealing barrel 10 in suitable manners, or the three strip-shaped sealing sections are integrally formed, or the three strip-shaped sealing sections are independent of each other.

The drawer assembly 1 of the present invention further includes a modified atmosphere preservation module 90, and the modified atmosphere preservation module 90 may be arranged on the inner side of the barrel cover 120. Due to the arrangement of the modified atmosphere preservation module 90, the inside of the drawer assembly 1 needs to be sealed with higher precision, and the modified atmosphere preservation module 90 needs to be repaired or replaced. Therefore, in the present application, the drawer assembly 1 is split into multiple parts, and a sealing member is arranged between every two parts, which not only facilitates the manufacture, repair or replacement of each part, but also ensures that good sealing can be formed at the interface between every two parts, so that sealing with a better effect and a higher level is formed inside the drawer.

The designer of the present application has realized through deep analysis that different parts of the drawer assembly 1 are different due to their positions, their own structures and other structures that match them, and therefore, the structural type of the sealing member used between different parts will have a greater impact on the sealing performance of the entire drawer assembly. Therefore, in the present application, each of the first sealing member 40 arranged between the head part 310 of the tray 30 and the drawer 20, the second sealing member 50 arranged between the head part 310 of the tray 30 and the front end of the bottom plate 113 of the sealing barrel 10, and the third sealing member 60 arranged between the front end plate 220 and the front end of the barrel cover 120 of the sealing barrel 10 is further designed to be provided with the body and the deformation blocking sheet extending outward in a bent manner from the body along the arc or the broken line. Elastic deformation of the sealing member can be facilitated in terms of both material and shape by means of the deformation blocking sheet in the special shape and the characteristic of generating elastic deformation of the deformation blocking sheet, and therefore, in the case of larger manufacturing tolerances for the tray, the sealing barrel, the front end plate and the drawer, it can be ensured that the interface can still realize a good sealing effect.

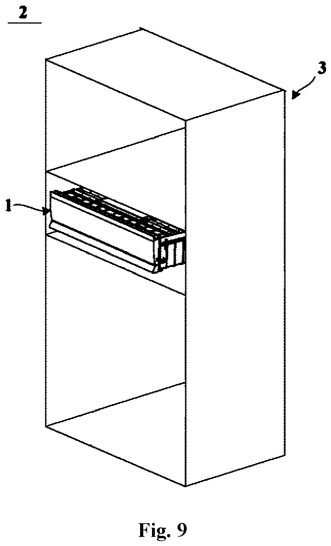

The present invention further provides a refrigerating and freezing device with a drawer assembly according to any one of claims 1 to 9. Figure 9 is a schematic structural diagram of a refrigerating and freezing device with a drawer assembly according to any one of claims 1 to 9, which is disclosed according to an embodiment of the present invention. The refrigerating and freezing device 2 of the present invention includes a box body 3 and the drawer assembly 1 according to any one of claims 1 to 9. At least one storage compartment is defined in the box body 3, and the drawer assembly 1 is detachably arranged in one of the storage compartments so as to provide a closed storage space in the refrigerating and freezing device 2.

Those skilled in the art should understand that the terms "upper", "lower", "inner", "outer", "horizontal", "front", "rear", etc. used to represent the orientation or position relationship in the embodiments of the present invention are based on the actual use state of the drawer assembly 1 after being placed in the refrigerating and freezing device 2. These terms are only for facilitating the description and understanding of the technical solutions of the present invention, rather than indicating or implying that the device or component referred to must have a specific orientation, and therefore cannot be understood as limitation of the present invention.

The scope of the present invention is defined by the following claims.

## Claims

1. A drawer assembly (1) for a refrigerating and freezing device, comprising:
a sealing barrel (10), provided with a front-end opening and comprising a barrel body (110) provided with a top opening and a barrel cover (120) configured to cover the opening;
a tray (30), configured to be inserted into a bottom of the sealing barrel (10) via the front-end opening in a way of being capable of being pushed and pulled; and
a drawer (20), carried on the tray (30), configured to be inserted into the sealing barrel (10) along with the tray (30) in a way of being capable of being pushed and pulled, and provided with a drawer body (210) and a front-end plate arranged on a front side of the drawer body (210), wherein the tray (30) is provided with a head part (310) located outside the sealing barrel (10) when the drawer (20) is in a fully closed state, and airtight sealing is formed between the head part (310) of the tray (30) and the drawer (20), between the head part (310) of the tray (30) and a front end of a bottom plate (113) of the sealing barrel (10), between the front-end plate (220) and a front end of the barrel cover (120) of the sealing barrel (10), as well as between the barrel body (110) and the barrel cover (120) via sealing members, so that when the drawer (20) is in the fully closed state, a closed storage space is formed inside the drawer (20).

2. The drawer assembly (1) according to claim 1, wherein each of a first sealing member arranged between the head part (310) of the tray (30) and the drawer (20), a second sealing member arranged between the head part (310) of the tray (30) and the front end of the bottom plate (113) of the sealing barrel (10), and a third sealing member arranged between the front-end plate (220) and the front end of the barrel cover (120) of the sealing barrel (10) comprises a body and a deformation blocking sheet extending outward in a bent manner from the body along an arc or a broken line.

3. The drawer assembly (1) according to claim 2, wherein the first sealing member is connected to the head part (310) of the tray (30), and the deformation blocking sheet of the first sealing member extends downward in a suspending manner from front to back from the body of the first sealing member along the arc, and is in elastic contact with the drawer (20).

4. The drawer assembly (1) according to claim 3, wherein the tray (30) is further provided with a tray bottom plate connected to a rear side of the head part (310), and an extending tail end of the deformation blocking sheet of the first sealing member abuts against an upper surface of the tray bottom plate.

5. The drawer assembly (1) according to claim 2, further comprising a display control assembly (80), wherein the tray (30) further comprises a display cover (340) covering a front side of the head part (310), and the display control assembly (80) is arranged in an accommodating space defined between the display cover (340) and the head part (310).

6. The drawer assembly (1) according to claim 5, wherein
a middle part of the body of the first sealing member is provided with a first slot having a downward notch; and
the head part (310) of the tray (30) is provided with a first flange extending upward, and the first flange is inserted into the first slot so as to form a labyrinth type airtight structure between a gap between the drawer (20) and a tray bottom plate and the accommodating space.

7. The drawer assembly (1) according to claim 2, wherein the second sealing member is connected to the bottom plate (113) of the sealing barrel (10), and the deformation blocking sheet of the second sealing member in the oblique downward direction extends forward from the body of the second sealing member and then in the oblique upward direction extends forward, so as to be in elastic contact with the head part (310) of the tray (30) when the drawer (20) is in the fully closed state

8. The drawer assembly (1) according to claim 2, wherein the third sealing member is connected to the barrel cover (120) of the sealing barrel (10), and the deformation blocking sheet of the third sealing member in the oblique upward direction extends forward from the body of the third sealing member and then in the oblique downward direction extends forward, so as to be in elastic contact with the front-end plate (220) when the drawer (20) is in the fully closed state.

9. The drawer assembly (1) according to claim 1, wherein labyrinth type airtight sealing is formed between the barrel body (110) and the barrel cover (120) via an inserted fourth sealing member.

10. A refrigerating and freezing device, comprising:
a box body(3), defining at least one storage compartment therein; and
the drawer assembly (1) according to any one of claims 1 to 9, is detachably arranged in one of the storage compartments so as to provide a closed storage space in the refrigerating and freezing device.

## Patentansprüche

1. Schubladenanordnung (1) für eine Kühl- und Gefriervorrichtung, umfassend ein Dichtungsgehäuse (10), das mit einer Vorderendöffnung versehen ist, und umfassend einen Gehäusekörper (110), der mit einer oberen Öffnung versehen ist, und eine Gehäuseabdeckung (120), die dazu ausgestaltet ist, die obere Öffnung abzudecken;
ein Tablett (30), das dazu ausgestaltet ist, in einen Boden des Dichtungsgehäuses (10) über die Vorderendöffnung auf eine Weise eingesetzt zu werden, dass es imstande ist, geschoben und gezogen zu werden; und
eine auf dem Tablett (30) geführte Schublade (20), die dazu ausgestaltet ist, gemeinsam mit dem Tablett (30) in das Dichtungsgehäuse (10) auf eine Weise eingesetzt zu werden, dass es imstande ist, geschoben und gezogen zu werden, und mit einem Schubladenkörper (210) und einer Vorderendplatte, die an einer Vorderseite des Schubladenkörpers (210) angeordnet ist, versehen ist, wobei
das Tablett (30) mit einem Kopfteil (310) versehen ist, das sich außerhalb des Dichtungsgehäuses (10) befindet, wenn die Schublade (20) in einem vollständig geschlossenen Zustand ist, und eine luftdichte Dichtung ausgebildet ist zwischen dem Kopfteil (310) des Tabletts (30) und der Schublade (20), zwischen dem Kopfteil (310) des Tabletts (30) und einem vorderen Ende der Bodenplatte (113) des Dichtungsgehäuses (10), zwischen der Vorderendplatte (220) und einem vorderen Ende der Gehäuseabdeckung (120) des Dichtungsgehäuses (10) sowie zwischen dem Gehäusekörper (110) und der Gehäuseabdeckung (120) über Abdichtungselemente, sodass wenn die Schublade (20) in einem vollständig geschlossenen Zustand ist, ein geschlossener Aufbewahrungsraum in der Schublade (20) ausgebildet wird.

2. Schubladenanordnung (1) nach Anspruch 1, wobei
jedes eines ersten Abdichtungselementes, das zwischen dem Kopfteil (310) des Tabletts (30) und der Schublade (20) angeordnet ist,
eines zweiten Abdichtungselementes, das zwischen dem Kopfteil (310) des Tabletts (30) und einem vorderen Ende der Bodenplatte (113) des Dichtungsgehäuses
und eines dritten Abdichtungselementes, das zwischen der Vorderendplatte (220) und dem vorderen Ende der Gehäuseabdeckung (120) des Dichtungsgehäuses (10) einen Körper und ein Verformungsblockierblech, das sich von dem Körper entlang eines Bogens oder einer gebrochenen Linie auf eine gebogene Weise nach außen erstreckt, umfassen.

3. Schubladenanordnung (1) nach Anspruch 2, wobei das erste Abdichtungselement mit dem Kopfteil (310) des Tabletts (30) verbunden ist und
das Verformungsblockierblech des ersten Abdichtungselementes sich nach unten auf hängende Weise von vorn nach hinten von dem Körper des ersten Abdichtungselementes entlang des Bogens erstreckt und in elastischem Kontakt mit der Schublade (20) steht.

4. Schubladenanordnung (1) nach Anspruch 3, wobei
das Tablett (30) ferner mit einer Tablettbodenplatte versehen ist, die mit einer hinteren Seite des Kopfteils (310) verbunden ist, und
ein sich erstreckendes hinteres Ende des Verformungsblockierbleches des ersten Abdichtungselementes an einer oberen Fläche der Tablettbodenplatte anliegt.

5. Schubladenanordnung (1) nach Anspruch 2, ferner umfassend eine Anzeigesteuerungsanordnung (80),
wobei das Tablett (30) ferner eine Anzeigeabdeckung (340) umfasst, die eine Vorderseite des Kopfteils (310) abdeckt,
und die Anzeigesteuerungsanordnung (80) in einem Aufnahmeraum (340) angeordnet ist, der zwischen der Anzeigeabdeckung und dem Kopfteil (310) definiert ist.

6. Schubladenanordnung (1) nach Anspruch 5, wobei ein Mittelteil des Körpers des ersten Abdichtungselementes mit einem ersten Schlitz versehen ist, der eine nach unten geneigte Kerbe aufweist; und
das Kopfteil (310) des Tabletts (30) mit einem ersten Flansch versehen ist, der sich aufwärts erstreckt,
und der erste Flansch in den ersten Schlitz eingesetzt ist, um eine labyrinthartige luftdichte Struktur zwischen einer Lücke zwischen der Schublade (20) und einer Tablettbodenplatte und dem Aufnahmeraum auszubilden.

7. Schubladenanordnung (1) nach Anspruch 2, wobei das zweite Abdichtungselement mit der Bodenplatte (113) des Abdichtungsfasses (10) verbunden ist, und
das Verformungsblockierblech des zweiten Abdichtungselementes in der geneigten Abwärtsrichtung sich von dem Körper des zweiten Abdichtungselementes vorwärts und dann in die geneigte Aufwärtsrichtung vorwärts erstreckt, um in elastischem Kontakt mit dem Kopfteil (310) des Tabletts (30) zu stehen, wenn die Schublade (20) in dem vollständig geschlossenen Zustand ist.

8. Schubladenanordnung (1) nach Anspruch 2, wobei
das dritte Abdichtungselement mit der Gehäuseabdeckung (120) des Dichtungsgehäuses (10) verbunden ist und
das Verformungsblockierblech des dritten Abdichtungselementes in der geneigten Aufwärtsrichtung sich von dem Körper des dritten Abdichtungselementes vorwärts und dann in die geneigte Abwärtsrichtung erstreckt, um in Kontakt mit der Vorderendplatte (220) zu stehen, wenn die Schublade (20) in dem vollständig geschlossenen Zustand ist.

9. Schubladenanordnung (1) nach Anspruch 1, wobei
eine labyrinthartige luftdichte Abdichtung zwischen dem Dichtungsgehäuse (110) und der Gehäuseabdeckung (120) durch ein eingesetztes viertes Abdichtungselement ausgebildet ist.

10. Kühl- und Gefriervorrichtung, umfassend
einen Gehäusekörper (3), der mindestens ein Aufbewahrungsfach darin definiert; und
die Schubladenanordnung (1) nach einem der Ansprüche 1 bis 9, die abnehmbar in einem der Aufbewahrungsfächer angeordnet ist, um einen geschlossenen Aufbewahrungsraum in der Kühl- und Gefriervorrichtung bereitzustellen.

## Revendications

1. Ensemble tiroir (1) pour un dispositif de réfrigération et de congélation, comprenant :
un boîtier d'étanchéité (10), pourvu d'une ouverture d'extrémité avant et comprenant un corps de boîtier (110) pourvu d'une ouverture supérieure et un couvercle de boîtier (120) conçu pour couvrir l'ouverture supérieure ;
un plateau (30), conçu pour être inséré dans un fond du boîtier d'étanchéité (10) via l'ouverture d'extrémité avant de manière à pouvoir être poussé et tiré ; et
un tiroir (20), porté sur le plateau (30), conçu pour être inséré dans le boîtier d'étanchéité (10) avec le plateau (30) de manière à pouvoir être poussé et tiré, et pourvu d'un corps de tiroir (210) et d'une plaque d'extrémité avant agencée sur un côté avant du corps de tiroir (210),
le plateau (30) étant pourvu d'une partie de tête (310) située à l'extérieur du boîtier d'étanchéité (10) lorsque le tiroir (20) est dans un état complètement fermé, et un joint étanche à l'air étant formé entre la partie de tête (310) du plateau (30) et le tiroir (20), entre la partie de tête (310) du plateau (30) et une extrémité avant d'une plaque de fond (113) du boîtier d'étanchéité (10), entre la plaque d'extrémité avant (220) et une extrémité avant du couvercle de boîtier (120) du boîtier d'étanchéité (10), ainsi qu'entre le corps de boîtier (110) et le couvercle de boîtier (120) via des éléments d'étanchéité, de telle sorte que lorsque le tiroir (20) est dans l'état complètement fermé, un espace de stockage fermé est formé à l'intérieur du tiroir (20).

2. Ensemble tiroir (1) selon la revendication 1, dans lequel
chacun parmi un premier élément d'étanchéité agencé entre la partie de tête (310) du plateau (30) et le tiroir (20), un deuxième élément d'étanchéité agencé entre la partie de tête (310) du plateau (30) et l'extrémité avant de la plaque de fond (113) du boîtier d'étanchéité, et un troisième élément d'étanchéité agencé entre la plaque d'extrémité avant (220) et l'extrémité avant du couvercle de boîtier (120) du boîtier d'étanchéité (10) comprend un corps et une feuille de blocage de déformation s'étendant vers l'extérieur d'une manière courbée à partir du corps le long d'un arc ou d'une ligne brisée.

3. Ensemble tiroir (1) selon la revendication 2, dans lequel le premier élément d'étanchéité est connecté à la partie de tête (310) du plateau (30), et
la feuille de blocage de déformation du premier élément d'étanchéité s'étend vers le bas d'une manière suspendue de l'avant vers l'arrière depuis le corps du premier élément d'étanchéité le long de l'arc, et est en contact élastique avec le tiroir (20).

4. Ensemble tiroir (1) selon la revendication 3, dans lequel
le plateau (30) est en outre pourvu d'une plaque de fond de plateau connectée à un côté arrière de la partie de tête (310), et
une extrémité de queue d'extension de la feuille de blocage de déformation du premier élément d'étanchéité vient en butée contre une surface supérieure de la plaque de fond de plateau.

5. Ensemble tiroir (1) selon la revendication 2, comprenant en outre un ensemble de contrôle d'affichage (80), dans lequel le plateau (30) comprend en outre un couvercle d'affichage (340) couvrant un côté avant de la partie de tête (310),
et l'ensemble de contrôle d'affichage (80) est agencé dans un espace de logement défini entre le couvercle d'affichage (340) et la partie de tête (310).

6. Ensemble tiroir (1) selon la revendication 5, dans lequel une partie médiane du corps du premier élément d'étanchéité est pourvue d'une première fente ayant une encoche vers le bas ; et
la partie de tête (310) du plateau (30) est pourvue d'une première bride s'étendant vers le haut,
et la première bride est insérée dans la première fente de manière à former une structure étanche à l'air de type labyrinthe entre un espace entre le tiroir (20) et une plaque de fond de plateau et l'espace de logement.

7. Ensemble tiroir (1) selon la revendication 2, dans lequel le deuxième élément d'étanchéité est connecté à la plaque de fond (113) du boîtier d'étanchéité (10), et
la feuille de blocage de déformation du deuxième élément d'étanchéité dans la direction oblique vers le bas s'étend vers l'avant à partir du corps du deuxième élément d'étanchéité, puis dans la direction oblique vers le haut s'étend vers l'avant, de manière à être en contact élastique avec la partie de tête (310) du plateau (30) lorsque le tiroir (20) est dans l'état complètement fermé.

8. Ensemble tiroir (1) selon la revendication 2, dans lequel
le troisième élément d'étanchéité est connecté au couvercle de boîtier (120) du boîtier d'étanchéité (10), et
la feuille de blocage de déformation du troisième élément d'étanchéité dans la direction oblique vers le haut s'étend vers l'avant à partir du corps du troisième élément d'étanchéité, puis dans la direction oblique vers le bas s'étend vers l'avant, de manière à être en contact élastique avec la plaque d'extrémité avant (220) lorsque le tiroir (20) est dans l'état complètement fermé.

9. Ensemble tiroir (1) selon la revendication 1, dans lequel
un joint étanche à l'air de type labyrinthe est formé entre le corps de boîtier (110) et le couvercle de boîtier (120) via un quatrième élément d'étanchéité inséré.

10. Dispositif de réfrigération et de congélation, comprenant :
un corps de boîte (3), définissant au moins un compartiment de stockage à l'intérieur ; et
l'ensemble tiroir (1) selon l'une quelconque des revendications 1 à 9, est agencé de manière détachable dans un des compartiments de stockage de manière à fournir un espace de stockage fermé dans le dispositif de réfrigération et de congélation.
